# FASCICULE DE BREVET EUROPEEN

(11) **EP 1 110 020 B1**
(45) Date de publication et mention de la délivrance du brevet: **17.04.2002**
(21) Numéro de dépôt: 99940271.2
(22) Date de dépôt: 02.09.1999
(51) Int. Cl.: F16L 15/06

(54) **ASSEMBLAGE FILETE DE DEUX TUBES METALLIQUES AVEC GORGE DANS LE FILETAGE**
METALLROHRSCHRAUBVERBINDUNG MIT RILLE IM GEWINDE
THREADED CONNECTION OF TWO METAL TUBES WITH GROOVE IN THE THREADING

(30) Priorité: 07.09.1998 FR 9811278
(43) Date de publication de la demande: 27.06.2001
(73) Titulaire: VALLOUREC MANNESMANN OIL & GAS FRANCE, 59620 Aulnoye-Aymeries (FR)
(72) Inventeur: NOEL, Thierry, F-59990 Sebourg (FR); VARENNE, Emmanuel, F-69400 Villefranche s/Saone (FR)
(74) Mandataire: Desolneux, Jean-Paul Charles
(86) Numéro de dépôt international: FR9902085
(87) Numéro de publication internationale: WO0014442

(56) Documents cités:
- FR-A- 2 408 061
- FR-A- 2 599 811
- GB-A- 2 049 858
- US-A- 3 882 917

## Description

L'invention concerne les assemblages filetés de deux tubes métalliques.

On connaît de tels assemblages, notamment utilisés pour constituer des colonnes de tubes de cuvelage ou de production ou des colonnes de tiges de forage pour les puits d'hydrocarbures.

Dans la suite du présent document, le terme " assemblage fileté de deux tubes métalliques " couvre aussi bien l'assemblage dit intégral entre deux tubes de grande longueur, que l'assemblage entre un premier tube de grande longueur et un second tube de faible longueur tel que, par exemple, un manchon.

Ainsi, l'American Petroleum Institute (API) définit :
- dans sa spécification API 5CT des tubes métalliques et des assemblages filetés de tubes métalliques pour l'exploitation et le cuvelage de puits d'hydrocarbures,
- et dans sa spécification API 5B des dispositions standards de filetages coniques pour de tels assemblages ainsi que des formes standards de filets : triangulaire, " ronde " ou trapézoïdale.

Les filets triangulaires ou ronds selon API 5B comportent sur chacun des éléments mâle et femelle deux flancs latéraux, un flanc porteur, un flanc d'engagement, chacun à 30° de chaque côté d'un plan normal à l'axe de l'assemblage.

En fin de vissage, du fait de la conicité des filetages, chacun des deux flancs est en contact sous pression de contact métal-métal avec son conjugué et il est ménagé un jeu entre sommet et fond des filets conjugués, les sommets et fonds de filets étant très arrondis dans le cas des filets ronds.

Les filets trapézoïdaux selon API 5B comportent sur chacun des éléments mâle et femelle deux flancs latéraux, un flanc porteur et un flanc d'engagement, peu inclinés par rapport au plan normal à l'axe d'assemblage, un fond de filet et un sommet de filets généralement parallèles au cône du filetage, les filets femelles ayant une forme parfaitement conjuguée de celle des filets mâles.

En fin de vissage sur ce type d'assemblage à filets trapézoïdaux selon API 5B, du fait de la conicité des filetages, le sommet de filet d'au moins un des éléments mâle ou femelle est en contact sous pression de contact métal-métal avec le fond de filet de l'élément conjugué ; en outre, les flancs porteurs sont également en contact alors qu'un jeu axial est ménagé entre les flancs d'engagement, tout au moins dans le cas le plus fréquemment rencontré où les éléments de l'assemblage sont en traction de par le poids de la colonne par exemple ou encore de par la réaction de butées en appui.

De tels assemblages à jeu axial sont appelés « à filets interférents » parce qu'il se développe alors une interférence radiale entre les surfaces filetées conjuguées qui se traduit par une pression de contact métal-métal entre ces surfaces et par une augmentation du couple de vissage, augmentation due aux frottements à vaincre. L'intensité de l'interférence radiale est mesurée par la valeur de l'interférence diamétrale.

On désigne de manière connue par " interférence diamétrale" la différence de diamètre entre un point de l'élément mâle et le point conjugué de l'élément femelle lorsque les éléments ne sont pas assemblés ; une valeur positive d'interférence diamétrale traduit l'existence d'une pression de contact des zones en contact de l'assemblage, une valeur nulle d'interférence diamétrale traduit un simple contact sans pression de contact et une valeur négative d'interférence diamétrale un jeu radial.

Dans d'autres types d'assemblages tels que, par exemple, celui décrit dans la demande de brevet EP 0454147, le filetage est conçu pour que les deux flancs latéraux arrivent juste en contact en fin de vissage, un jeu pouvant par contre être ménagé entre fonds et sommets de filets conjugués.

De tels assemblages appelés « à filets trapézoïdaux sans jeu axial » dans la suite du présent document permettent de travailler aussi bien en compression axiale qu'en traction axiale ou en flexion.

D'autres assemblages, tels que décrits dans les brevets US 2,211,179, US 4,161,332 ou US 4,537,428 utilisent un filetage cylindrique à deux étages avec des filets trapézoïdaux. De tels filetages ne présentent normalement pas d'interférence radiale, le contact entre les filetages n'ayant lieu qu'au niveau des flancs, notamment des flancs porteurs lorsque l'assemblage est soumis à des efforts axiaux de traction.

Le brevet US Re 30,647 décrit une variante d'assemblage fileté à filetages cylindriques bi-étagés et filets trapézoïdaux dits " filets coins" ("wedge threads ") dont la largeur de filet mâle et femelle varie tout au long de chaque étage du filetage de manière coordonnée de façon à ce que, au fur et à mesure que l'on visse l'élément mâle dans l'élément femelle, les espaces axiaux entre flancs mâles et femelles existant à l'engagement des éléments diminuent jusqu'à s'annuler ; les flancs latéraux jouent alors un rôle de butée et de positionnement pour des portées d'étanchéité indépendantes.

On désigne dans la suite du présent document par filet coin ou par filet à largeur variable un filet présentant de telles caractéristiques.

Le brevet US Re 34467 décrit une adaptation d'un filet de largeur variable sur un assemblage à filetages coniques interférents, dans le but d'éviter les surpressions de graisse entre fonds et sommets de filets, surpressions susceptibles de causer des mesures erronées de couple de vissage sur des assemblages du type du brevet US Re 30647.

La demande de brevet WO 94/29627 décrit une adaptation d'un filet de largeur variable sur un assemblage à filetages coniques, dans le but de visser l'assemblage sous un couple de vissage très élevé. Selon le document WO 94/29627, on poursuit le vissage d'un filetage à filets coins après que les flancs latéraux mâles des filetages soient arrivés en contact avec les flancs femelles, la surface totale des flancs des filets permettant d'exercer un couple de vissage très élevé sans risque de plastification.

Dans la plupart des assemblages filetés, notamment dans ceux à filetages coniques, le couple de vissage augmente régulièrement au cours du vissage et/ou brutalement à un moment donné mais doit de toutes façons rester en deçà d'une valeur correspondant à la plastification du métal, la plastification entraînant une déformation permanente du métal et un risque de grippage dans les zones plastifiées après plusieurs vissages-dévissages.

Si la pente de la courbe couple de vissage - nombre de tours de vissage est élevée, le couple maximum permis sera atteint après une rotation relativement faible d'un élément par rapport à l'autre : il en est ainsi, par exemple, sur un assemblage à filets très fortement interférents ou encore après l'arrivée en contact des flancs latéraux sur un assemblage à filets trapézoïdaux sans jeu axial ou à largeur de filet variable.

Les tolérances d'usinage entraînant des pentes de courbes de couple variables suivant l'appariement des filetages mâle/femelle, il n'est pas possible dans ces conditions de prévoir la position relative finale des éléments de l'assemblage pour la valeur du couple maximal permis.

Ces inconvénients sont amplifiés lorsque chaque élément mâle et femelle comprend en outre une portée d'étanchéité métal-métal et une butée comme, par exemple, dans le document EP 0454147 car il faut alors synchroniser l'action du filetage, de la portée d'étanchéité et de la butée en fin de vissage pour tous les cas d'appariement d'éléments mâle-femelle.

On a cherché dans la présente invention à réaliser un assemblage entre deux tubes métalliques à l'aide de filetages coniques, cylindriques ou cylindro-coniques ayant différentes formes de filets et de jeux d'assemblage qui permette de s'affranchir des inconvénients présentés ci-dessus.

Le terme " filetage " désigne dans la suite du présent document l'ensemble des parties filetées d'un même élément. Un filetage peut ainsi être constitué d'une seule partie filetée ou de plusieurs parties filetées, par exemple de deux parties filetées cylindriques étagées ou d'une partie filetée conique et d'une partie filetée cylindrique du genre de celles décrites dans le brevet US 5437429, le filetage étant dans ce demier cas appelé cylindro-conique.

Selon l'invention, l'assemblage fileté de deux tubes métalliques, comportant un élément mâle en extrémité d'un premier tube et un élément femelle en extrémité d'un second tube, l'élément mâle comprenant un filetage mâle extérieur, l'élément femelle comprenant un filetage femelle intérieur dont chacun des flancs de filet est parallèle au flanc correspondant du filetage mâle, les filetages mâle et femelle étant vissés l'un dans l'autre, est tel qu'au moins un des filetages mâle ou femelle comporte une gorge réalisée dans le filet et débouchant ou sur le flanc d'engagement ou sur le sommet de filet ou encore à cheval entre le flanc d'engagement et le sommet de filet.

Le fait que chacun des flancs de filet femelle est parallèle au flanc correspondant mâle permet l'assemblage des éléments sans que l'un ou l'autre des flancs porte de manière ponctuelle sur le flanc conjugué.

On entend par gorge une cavité qui présente deux parois de gorge et un fond de gorge, dont la longueur développée sur le filetage est grande par rapport à sa largeur et à sa profondeur, ces dernières grandeurs étant mesurées dans un plan de coupe passant par l'axe des tubes.

Le profil de gorge correspond à l'intersection de la gorge par ce plan de coupe et la largeur de gorge est mesurée sur ce profil à une profondeur donnée.

Jusqu'à présent, les filets étaient considérés comme un tout massif et on cherchait plutôt à les renforcer. C'est donc avec surprise que l'on s'est aperçu de l'intérêt de les considérer comme une structure dont la rigidité peut être modifiée en y réalisant une gorge.

La fonction de la gorge réalisée dans le filet dans la présente invention est de réduire les forces de contact entre les filetages mâle et femelle et par là notamment de diminuer le couple de vissage qui est proportionnel à ces forces de contact.

Pour cela, la gorge peut être disposée dans le filet de manière ou à augmenter la flexibilité de la partie de filet soumise au contact sous pression avec le filet conjugué ou à diminuer les surfaces de contact ou encore à agir sur ces deux caractéristiques à la fois.

Des exemples de disposition de gorge remplissant ces fonctions sur des assemblages filetés selon l'invention seront exposés plus loin pour différents types de filetages et pour différentes formes de filets.

On connaît par les documents US 3,882,917 et FR 2.408.061 des assemblages filetés dans lesquels un des filets présente une sorte de gorge débouchant en sommet de filet mais ces gorges sont étroitement associées à des structures de flancs de filet permettant d'obtenir un assemblage autobloquant, c'est-à-dire résistant au dévissage.

Dans le cas du brevet US 3,882,917, un des flancs de filet présente une nervure en excroissance à trois pans dont un pan est en appui sur le flanc correspondant du filet conjugué, les deux autres pans délimitant une sorte de gorge qui permet la mise en flexion de la nervure.

Dans le cas du document FR 2.408.061 qui s'applique à des filets trapézoïdaux, l'inclinaison des flancs de filet avec gorge est différente de celle des flancs de filet sans gorge et est telle que la largeur de la gorge à son débouché diminue lors du vissage sous les efforts de flexion résultant des écarts d'orientation des flancs entre filets conjugués.

Aucun de ces documents ne divulgue la fonction de la gorge de l'assemblage selon l'invention et ne s'applique à des filets femelles dont chacun des flancs de filet est parallèle au flanc correspondant des filets mâles.

La gorge peut être réalisée selon l'invention sur des filetages coniques, cylindriques ou cylindro-coniques, à simple ou à plusieurs étages, à filets interférents ou à filets sans jeu axial et à largeur de filet constante ou à largeur de filet variable le long du filetage.

La gorge peut être réalisée dans des filets triangulaires, ronds ou trapézoïdaux, le terme " filets trapézoïdaux " comprenant dans la suite du présent document les filets à angle de flanc porteur négatif du genre de ceux décrits dans le document EP 0454147 ou à angle de flanc porteur positif ainsi que les filets en forme de queue d'aronde du genre de ceux décrits dans le document US Re 30,647 ou de demi-queue d'aronde comme dans le document WO94/29627.

La gorge peut être réalisée sur tout ou partie du filetage mâle ou du filetage femelle ou des deux simultanément.

Elle peut aussi être réalisée alternativement sur des parties de filetage mâle et femelle.

Elle peut encore être réalisée de manière continue ou discontinue sur les filetages mâle ou femelle.

Dans le cas de filetages à filets évanouissants, la gorge peut n'être réalisée que sur les filets dits parfaits, c'est-à-dire ceux dont la hauteur est complète ou être également réalisée sur les filets imparfaits.

Le profil de la gorge peut être très divers, tel que, par exemple, un profil semi-circulaire, en U à branches parallèles ou non parallèles, en V symétrique ou dissymétrique ou une combinaison de ces formes, notamment un U ou un V à fond arrondi de rayon donné, ou encore un profil plus complexe et non symétrique.

Préférentiellement, la gorge possède un profil constant sur toute sa longueur.

Lorsque la gorge débouche en sommet de filet, l'axe du profil de gorge peut être selon le cas perpendiculaire à l'axe de l'assemblage ou incliné par rapport à cette perpendiculaire.

Lorsque la gorge débouche sur le flanc d'engagement, l'axe du profil de gorge peut être selon le cas parallèle à l'axe de l'assemblage ou incliné par rapport à celui-ci.

Eventuellement, la gorge peut avoir une profondeur ou une largeur ou ces deux caractéristiques variables sur sa longueur.

Préférentiellement, le fond de gorge présente un rayon supérieur ou égal à 0,2 mm pour limiter les concentrations de contraintes à ce niveau.

Préférentiellement lorsque la gorge débouche en sommet de filet, la largeur de la gorge mesurée à son débouché est inférieure ou égale aux 2/3 de la largeur du filet.

Dans toute la suite du présent document, on entend par largeur de filet la largeur de celui-ci mesurée axialement à mi-hauteur du filetage et on entend par hauteur de filet la distance mesurée dans un plan perpendiculaire à l'axe de l'assemblage entre les lignes de fond et de sommet de filet.

Préférentiellement lorsque la gorge débouche sur le flanc d'engagement, la largeur de la gorge à son débouché est inférieure ou égale aux 2/3 de la hauteur de filet.

Préférentiellement aussi lorsque la gorge est disposée sur le flanc d'engagement du filet, sa profondeur est inférieure ou égale aux 2/3 de la largeur du filet.

Préférentiellement encore, lorsque la gorge est disposée sur le sommet de filet, sa profondeur est inférieure ou égale à la hauteur du filet de sorte que le fond de gorge ne dépasse pas la ligne joignant les fonds de filet.

Préférentiellement toujours, lorsque la gorge est disposée à cheval entre sommet de filet et flanc d'engagement, sa largeur au débouché et sa profondeur obéissent à la fois aux critères de gorge débouchant en sommet de filet et à ceux de gorge débouchant sur le flanc d'engagement. Sa profondeur est de ce fait inférieure ou égale à la plus faible valeur entre la hauteur du filet et les 2/3 de la largeur du filet et sa largeur au débouché est inférieure ou égale aux 2/3 de la plus faible valeur entre la largeur et la hauteur du filet.

Avantageusement, les éléments mâle et femelle de l'assemblage fileté selon l'invention comprennent chacun au moins une portée d'étanchéité métal-métal, chaque portée d'étanchéité mâle située sur l'élément mâle interférant radialement en fin de vissage avec une portée d'étanchéité femelle située de manière correspondante sur l'élément femelle de manière à créer au moins un contact d'étanchéité métal-métal entre éléments mâle et femelle.

Avantageusement aussi, les éléments mâle et femelle de l'assemblage fileté selon l'invention comprennent chacun au moins une butée, la butée mâle située sur l'élément mâle venant en appui sur la butée femelle située sur l'élément femelle pour déterminer précisément la position de fin de vissage et mettant sous pression de contact les flancs porteurs des filets mâle et femelle.

On décrira maintenant de façon non limitative différents exemples de réalisation d'assemblages filetés selon l'invention.

La figure 1 représente schématiquement un assemblage manchonné de deux tubes à l'aide de filetages coniques suivant l'état de la technique.

La figure 2 représente schématiquement une variante du même type d'assemblage suivant l'état de la technique.

La figure 3 représente schématiquement un assemblage intégral de deux tubes à l'aide d'un filetage cylindrique à deux étages suivant l'état de la technique.

La figure 4 représente schématiquement un détail de filetage à filets ronds avec gorge selon l'invention.

Les figures 5 à 7 représentent également schématiquement un détail de filetage à filets trapézoïdaux interférents avec gorge selon l'invention, chaque figure représentant une disposition différente de la gorge.

Les figures 8 à 10 représentent également schématiquement un détail de filetage à filets trapézoïdaux sans jeu axial avec gorge selon l'invention, chaque figure représentant une disposition différente de la gorge.

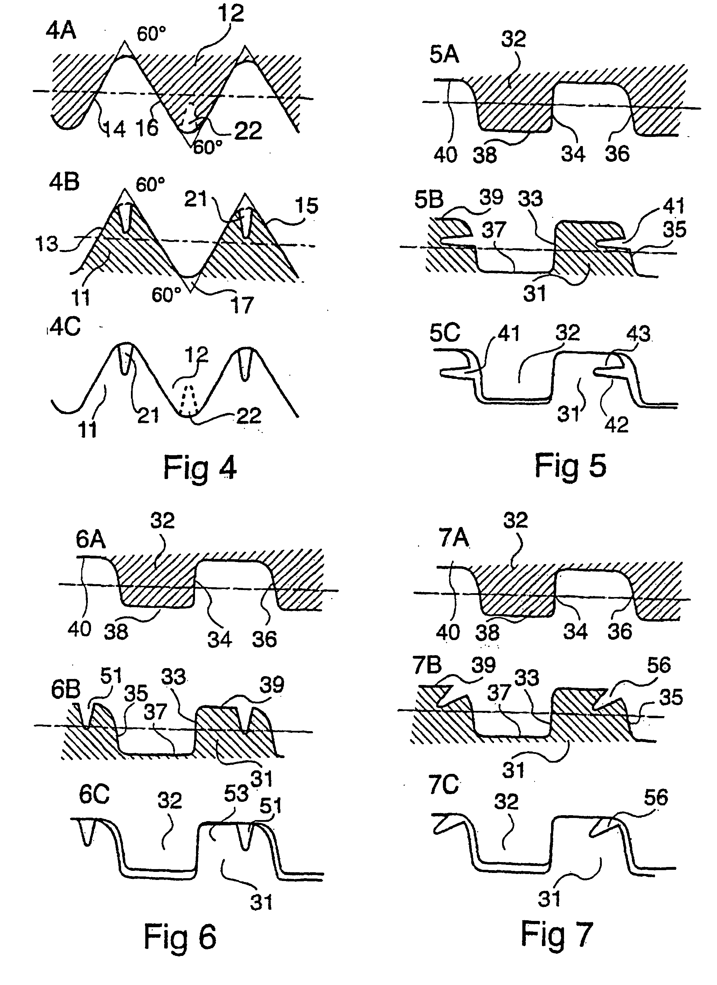

Chacune des figures 4 à 10 est composée de trois sous-figures, le suffixe A correspondant au filetage femelle, le suffixe B au mâle et le suffixe C à l'assemblage des deux.

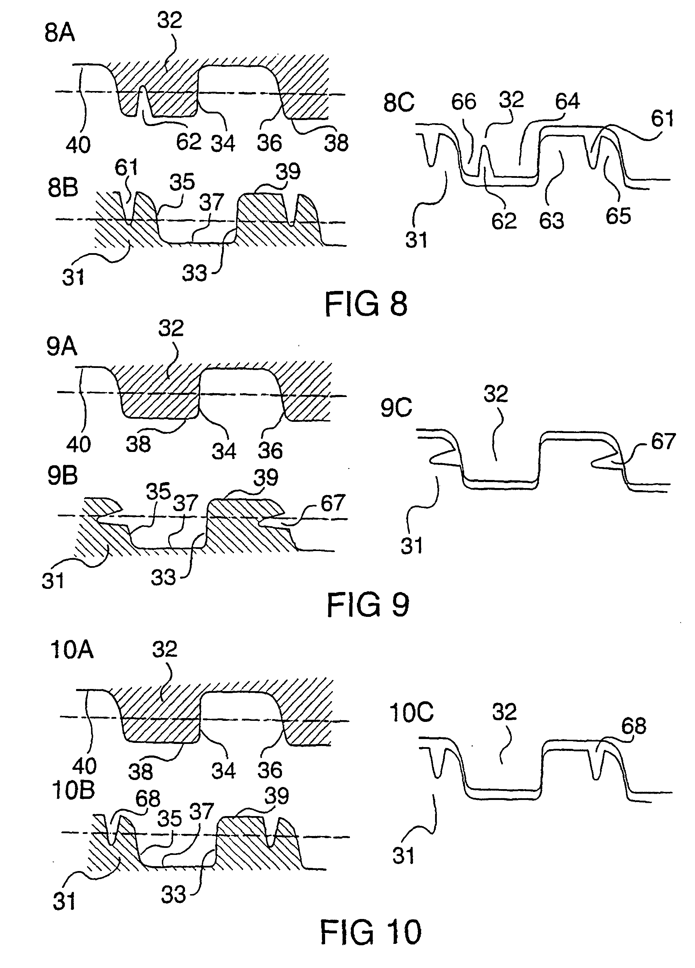

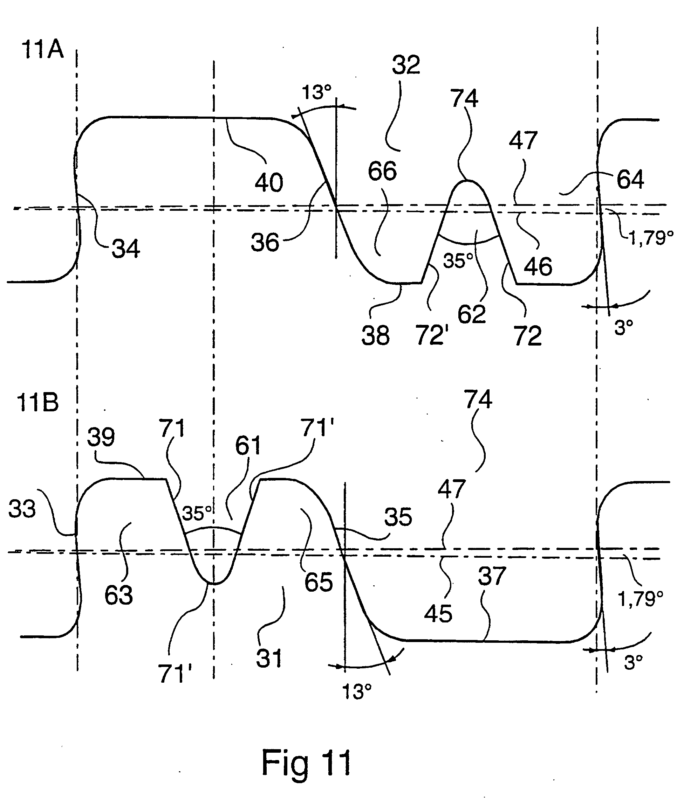

La figure 11 illustre avec plus de détails la disposition de gorge sur un filetage du genre de la figure 8, la figure 11A étant relative au filetage femelle et la figure 11B au filetage mâle.

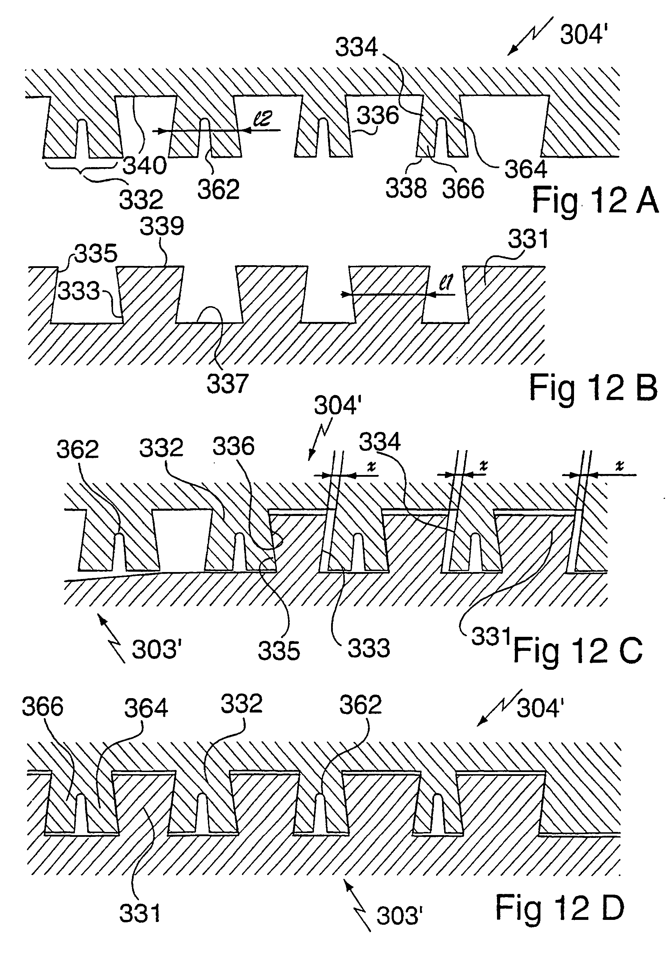

La figure 12 représente schématiquement un détail de filetage cylindrique avec filets coins à largeur variable et gorge selon l'invention, les indices A, B, C, D étant relatifs respectivement au filetage femelle, au filetage mâle, à l'assemblage en cours de vissage et à l'assemblage en position assemblée.

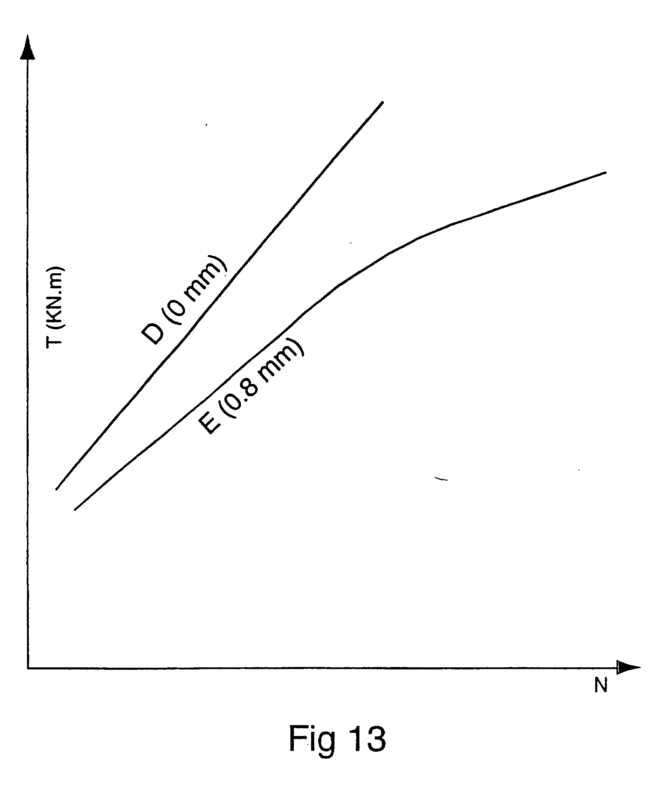

La figure 13 est une courbe schématique couple de vissage T - nombre de tours N pour un assemblage de tubes avec filetage selon la figure 12.

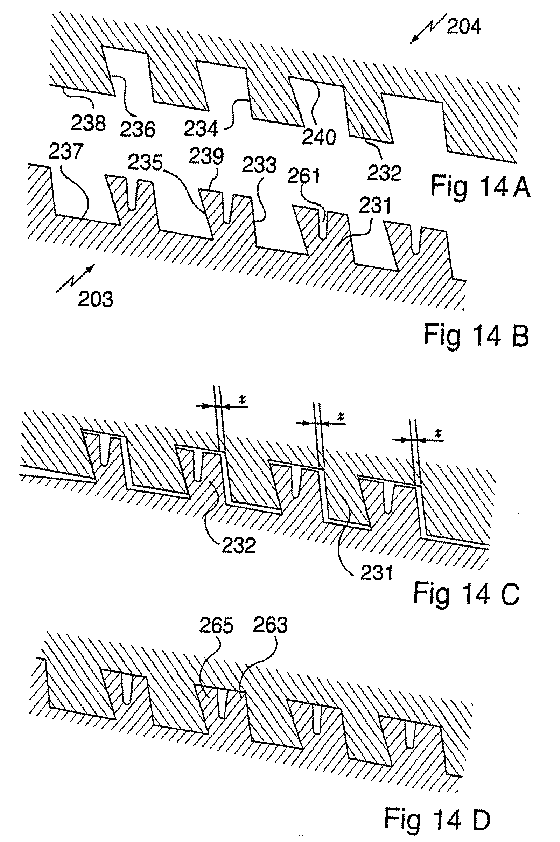

La figure 14 représente schématiquement un détail de filetage conique avec filets coins à largeur variable et gorge selon l'invention, les indices A, B, C, D étant relatifs respectivement au filetage femelle, au filetage mâle, à l'assemblage en cours de vissage et à l'assemblage en position assemblée.

Toutes ces figures ne sont que des schémas; les conicités et les jeux, notamment, n'y sont pas dessinés à l'échelle et ont été amplifiés pour mieux faire comprendre le fonctionnement des assemblages.

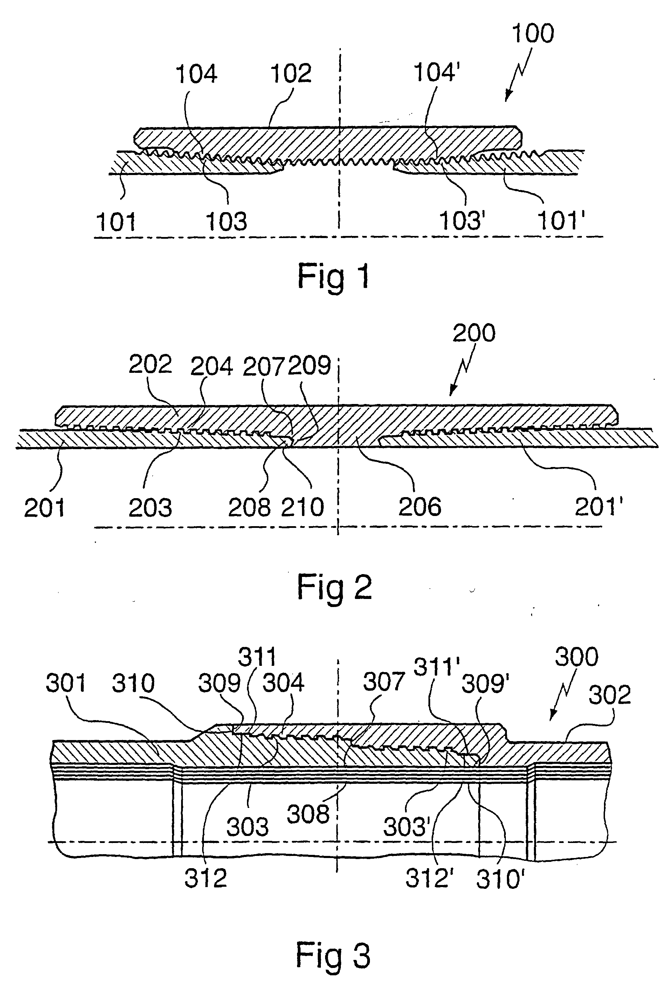

La figure 1 représente un assemblage fileté 100 selon la spécification API 5CT entre deux tubes métalliques 101 et 101' au moyen d'un manchon 102.

Chaque extrémité de tube 101, 101' comporte un élément mâle comprenant un filetage conique mâle 103, 103' à filets ronds.

Le manchon 102 comporte 2 éléments femelles disposés symétriquement par rapport au plan médian du manchon, chaque élément femelle comprenant un filetage conique femelle 104, 104' à filets conjugués du mâle.

Les filetages mâles 103, 103' sont vissés dans les filetages femelles conjugués 104, 104'.

La spécification API 5B définit pour ce type d'assemblage la forme des filets, leur dimension, la conicité des filetages, le pas des filetages, etc..

Bien que non représenté, on peut aussi utiliser selon les spécifications API 5CT et 5B un assemblage à filetages dits " Buttress ", similaire à celui de la figure 1 mais à filets trapézoïdaux.

La figure 2 représente de façon connue un assemblage fileté manchonné 200 à filetages coniques 203, 204 et à filets trapézoïdaux, le manchon 202 présentant un talon 206 dans sa partie centrale, talon permettant de rendre l'écoulement de fluide non turbulent dans les tubes 201, 201' et de loger des butées femelles 210 venant en appui contre des butées mâles 209 constituées par les surfaces annulaires d'extrémités des tubes.

Des portées d'étanchéité mâles 207 et femelles 208 coniques, disposées sur des parties non filetées et interférant radialement de manière à former une pression élastique de contact entre elles permettent d'assurer de manière également connue l'étanchéité de l'assemblage de la figure 2.

La forme conique des butées mâle et femelle 209, 210 permet également de manière connue de renforcer la pression de contact au niveau des portées 207, 208 et donc l'étanchéité de l'assemblage.

La figure 3 représente un assemblage fileté intégral 300 entre deux tubes 301 et 302 comportant des filetages cylindriques à double étage.

Le tube 301 comporte à son extrémité un élément mâle comprenant un filetage mâle cylindrique à deux étages 303, 303', une surface mâle conique d'épaulement 307 en demi-queue d'aronde entre les deux étages de filets mâles et des butées 309, 309' à chaque extrémité de l'élément mâle.

Le tube 302 comporte à son extrémité un élément femelle conjugué du mâle et comprenant un filetage femelle cylindrique à deux étages 304, 304', une surface femelle conique d'épaulement 308 en demi-queue d'aronde entre les 2 étages de filets femelles et des butées 310, 310' à chaque extrémité de l'élément femelle.

Les filetages mâle et femelle de l'assemblage 300 sont à filets trapézoïdaux et ne présentent normalement pas d'interférence radiale après vissage.

Dans l'état assemblé, les épaulements 307, 308 forment la butée principale, les butées 309, 309', 310, 310' ne servant que de butée de secours en cas d'enfoncement de la butée principale.

Les surfaces coniques 311', 312' respectivement sur les éléments mâle et femelle forment au voisinage de l'extrémité de l'élément mâle une paire intérieure de portées d'étanchéité métal-métal. Les surfaces coniques 311, 312 forment, elles, au voisinage de l'extrémité de l'élément femelle une paire extérieure de portées d'étanchéité métal-métal. La paire extérieure 311, 312 de portées d'étanchéité pourrait également être disposée entre les épaulements 307, 308 et l'étage de filetage de grand diamètre 303, 304.

Les figures 4 à 10 et 12, 14 illustrent schématiquement la mise en oeuvre d'une gorge selon l'invention sur des assemblages filetés du type des figures 1 à 3. Pour des raisons de clarté, les figures 4 à 10 et 12, 14 ne montrent que quelques filets mâles et femelles.

La figure 4 représente selon l'invention des portions de filetages coniques à filets ronds avec gorge sur un assemblage du type de la figure 1.

Les filets mâles 11 (fig. 4B) comprennent un flanc porteur 13 et un flanc d'engagement 15 chacun à 30° de chaque côté d'un plan perpendiculaire à l'axe de l'assemblage tandis que le fond de filet 17 est arrondi.

Une gorge 21 est taillée radialement dans le sommet de filet mâle avec un profil en V à fond arrondi.

La largeur de la gorge 21 à son débouché est de l'ordre de 25% de la largeur du filet 11, sa profondeur est égale à 50% de la hauteur du filet.

Le rayon à fond de gorge est de 0,4 mm.

Les filets femelles 12 (fig. 4A) comprennent un flanc porteur 14 et un flanc d'engagement 16 conjugués de ceux des filets mâles, le fond de filet étant arrondi.

Les flancs porteur 14 et d'engagement 16 sont disposés chacun à 30° de chaque côté d'un plan perpendiculaire à l'axe de l'assemblage et sont ainsi respectivement parallèles aux flancs mâles 13, 15.

Une gorge 22 représentée en pointillé et identique du point de vue forme et disposition à la gorge 21 peut être taillée radialement dans le sommet de filet femelle à la place ou en complément de la gorge 21 du filet mâle.

Les gorges 21 et/ou 22 en sommet de filet augmentent la flexibilité des filets et diminuent par conséquent la pression de contact sur les flancs latéraux de ceux-ci et le couple de vissage par rapport à des filets pleins.

La figure 5 représente selon l'invention des portions de filetages coniques à filets trapézoïdaux interférents et gorge 41 débouchant sur le flanc d'engagement, les filetages étant réalisés sur un assemblage du type de la figure 2.

Les filets mâles 31 (fig. 5B) comprennent un flanc porteur 33 dont l'orientation est sensiblement normale à l'axe de l'assemblage, un flanc d'engagement 35 incliné à environ 10° du plan normal à cet axe, un fond de filet 37 et un sommet de filet 39.

Les fonds de filets 37 et les sommets de filets 39 sont parallèles au cône du filetage.

La gorge 41 sépare partiellement le filet mâle 31 en deux parties; son profil est un V à fond arrondi orienté sensiblement parallèlement à l'axe de l'assemblage.

La largeur de la gorge 41 à son débouché sur le flanc d'engagement est de 1/3 de la hauteur du filet et sa profondeur est de 50 % de la largeur du filet.

L'angle au sommet du V de la gorge 41 est de 30° environ et la branche 42 du V du côté fond de filet mâle est sensiblement parallèle à l'axe de l'assemblage.

Le fond de gorge est un arc de cercle de rayon 0,4 mm.

Les filets femelles 32 (fig. 5A) ont une forme conjuguée à celle des filets mâles correspondants 31, c'est-à-dire que leur contour est parallèle au contour des filets mâles correspondants, notamment les flancs porteurs 33, 34 sont parallèles entre eux ainsi que par ailleurs les flancs d'engagement 35, 36 ; la hauteur de filet femelle est cependant légèrement plus faible que celle des mâles et la largeur de fond de filet femelle 40 est légèrement plus grande que celle des sommets conjugués mâles 39.

Les filets femelles 32 ne comportent pas de gorge.

La figure 5C illustre schématiquement le fonctionnement de l'assemblage en fin de vissage.

En fin de vissage, les flancs porteurs conjugués 33 et 34 sont en contact sous pression du fait, par exemple, de la réaction des butées ou encore d'un effort de traction axial sur l'assemblage. Cette pression de contact est répartie sur toute la largeur des flancs porteurs du fait que les flancs porteurs mâles sont parallèles aux flancs porteurs femelles.

De même, les sommets de filets mâles 39 sont en contact interférent radialement avec les fonds de filets femelles 40. Par contre, compte tenu de la géométrie indiquée plus haut, un jeu est ménagé, d'une part entre les flancs d'engagement conjugués 35 et 36 et d'autre part entre fonds de filets mâles 37 et sommets de filets femelles 38.

La partie supérieure 43 du filet mâle 31 soumise notamment à l'interférence radiale des surfaces 39 et 40 peut fléchir élastiquement et réduire la pression de contact et par là le couple de vissage.

On peut ajuster la flexibilité de la partie supérieure 43 du filet mâle 31 en jouant sur la position de la gorge 41 sur le flanc d'engagement 35 et sur la profondeur de la gorge.

Compte tenu de l'absence d'interférence radiale entre fonds de filet mâle 37 et sommet de filet femelle 38, la présence d'une gorge débouchant sur le flanc d'engagement 36 du filet femelle ne se justifie pas fonctionnellement.

Une telle disposition de gorge sur des filets interférents peut notamment être intéressante pour réduire la pression de contact entre sommets et fonds de filets au niveau des filets voisins de portées d'étanchéité métal-métal, une pression de contact élevée à ce niveau induisant une décharge de celle entre les portées d'étanchéité : on ne réalisera alors une gorge que sur la partie du filetage voisine de la portée d'étanchéité.

Bien qu'on ne l'ait pas représenté, on peut aussi concevoir de façon symétrique un assemblage avec interférence radiale entre fonds de filet mâle 37 et sommet de filet femelle 38 et une gorge réalisée dans le filet femelle et débouchant sur le flanc d'engagement 36.

La figure 6 représente selon l'invention des portions de filetages coniques à filets trapézoïdaux interférents similaires à ceux de la figure 5 mais la gorge 51 à profil en V à fond arrondi est réalisée dans les filets mâles de manière à déboucher en sommet 39 de filets.

La gorge 51 a notamment pour fonction, d'une part, de réduire les surfaces 39 et 40 interférentes radialement de manière à réduire la force de frottement proportionnelle aux surfaces et, d'autre part, d'augmenter la flexibilité de la partie porteuse 53 du filet lorsque les flancs porteurs 33 et 34 sont sous pression de contact, ce qui réduit aussi les forces de frottement, donc le couple de vissage de l'assemblage.

La gorge 51 a une forme similaire à celle de la gorge 41 mais elle est disposée radialement et débouche sur le sommet 39 de filet, plutôt du côté flanc d'engagement 35. Sa largeur au débouché est ainsi par exemple de 60% de la largeur du filet mâle et sa profondeur est de 50 % de la hauteur du filet.

Comme dans le cas de la figure 5, la présence d'une gorge en sommet 38 de filet femelle ne se justifie pas, aucun frottement ne se produisant à ce niveau avec le fond 37 de filet mâle.

La figure 7 représente selon l'invention des portions de filetages coniques à filets trapézoïdaux interférents similaires à ceux de la figure 5 mais la gorge 56 à profil en V à fond arrondi est disposée dans les filets mâles de manière à déboucher à cheval entre le sommet 39 de filet maie et le flanc d'engagement mâle 35.

Du fait de la disposition à cheval de la gorge 56, son orientation dans le volume du filet est oblique et l'axe du profil de gorge forme par exemple un angle à 45° par rapport au sommet 39 de filet.

La disposition de la gorge 56 permet à la fois d'augmenter la flexibilité du filet dont les faces 33 et 39 sont soumises à des pressions de contact et de réduire les surfaces de contact 39, 40.

La figure 8 représente selon l'invention des portions de filetages coniques à filets trapézoïdaux sans jeu axial, une gorge 61 étant réalisée en sommet 39 de filet mâle 31 et une autre gorge 62 étant réalisée en sommet 38 de filet femelle 32.

La forme des filets 31, 32 est similaire à celle des filets de la figure 5, notamment le contour des filets femelles 32 est parallèle au contour des filets mâles correspondants 31, sauf que les sommets 39 de filet mâle 31 et les fonds 40 de filet femelle 32, les fonds 37 de filet mâle et sommets 38 de filet femelle sont disposés de manière à ne pas interférer radialement en cours de vissage alors que les flancs latéraux 33, 34, 35, 36 sont disposés de manière à se trouver juste en contact en fin de vissage comme le montre la figure 8C.

Les gorges mâle 61 et femelle 62 ont comme pour les figures précédentes un profil en V à fond arrondi.

Comme pour les figures précédentes, l'angle au sommet du V des gorges 61, 62 est de 30° environ et le rayon de la pointe du V est de 0,4 mm.

La profondeur des gorges 61, 62 est par exemple de 70% de la hauteur de filet et leur largeur à leur débouché en sommet de filet est de 35% de la largeur de filet.

Les gorges 61, 62 découpent dans chaque filet 31, 32 des demi-dents 63, 65 dans le filet mâle, 64 et 66 dans le filet femelle.

Ces demi-dents sont beaucoup plus flexibles qu'une dent pleine lorsque les flancs latéraux conjugués 33, 34, 35, 36 arrivent en contact en fin de vissage. Grâce à cette flexibilité accrue, on peut synchroniser l'action de butées telles que 209, 210 sur la figure 2 avec l'accostage des flancs latéraux conjugués ; un accostage prématuré de ces flancs du fait d'éléments mâle et femelle mal appariés - ce qui se rencontre sur une faible partie des fabrications - se traduit simplement dans ce cas par une légère déformation élastique des filets en fin de vissage mais on obtient un positionnement correct des butées 209, 210, nécessaire pour obtenir un étanchéité satisfaisante au niveau des portées d'étanchéité 207, 208.

L'exemple suivant montre une application d'une telle configuration :
- diamètre extérieur des tubes : 177,8 mm (7")
- épaisseur des tubes : 10,36 mm (29 lb/ft)
- matériau traité pour une limite d'élasticité minimale de 551 MPa
- filetage conique à 5 filets trapézoïdaux par pouce (1 pouce est égal à 25,4 mm) de conicité 6,25 % au diamètre (soit un angle de 1,79° entre les cônes primitifs 45, 46 et la direction 47 de l'axe de l'assemblage).

Les figures 11B et 11A montrent avec davantage de détails par rapport à la figure 8 la forme respectivement des filets mâle 31 et femelle 32 qui sont dimensionnés pour ne pas présenter de jeu axial après assemblage.

Selon ces figures, les flancs porteurs 33, 34 sont à angles légèrement négatifs égaux à - 3° alors que les flancs d'engagement 35, 36 sont tous deux inclinés à 13° par rapport à la normale à l'axe de l'assemblage. Les sommets 38, 39 et les fonds 37, 40 de filets sont parallèles aux génératrices des cônes primitifs 45, 46 qui sont inclinées de 1,79° sur l'axe de l'assemblage.

La largeur de filet est voisine de 2,54 mm et la hauteur de filet de 1,6 mm.

Les gorges 61, 62 disposées respectivement sur le filet mâle 31 et sur le filet femelle 32 ont un axe perpendiculaire à l'axe de l'assemblage et débouchent en sommet de filet 39, 38.

Les gorges 61, 62 présentent deux parois de gorge 71, 71', 72, 72' inclinées et réunies par un fond de gorge 73, 74 de sorte que le profil de gorge est en V dissymétrique à fond arrondi.

La distance entre les axes des gorges 61, 62 et le flanc porteur correspondant 33, 34 est dans le cas présent de 1,4 mm.

L'angle au sommet du V est de 35°, la paroi 71, 72 dirigée vers le flanc porteur 33, 34 étant un peu plus inclinée sur l'axe du profil en V que l'autre paroi 71', 72'.

Le rayon en fond de gorge 73, 74 est de 0,4 mm.

Les gorges 61, 62 de la figure 11 ont une profondeur de 1 mm soit 62,5 % de la hauteur de filet. La largeur à leur débouché est alors de 38 % de la largeur de filet.

Bien qu'on ne l'ait pas représenté, on peut également réaliser selon l'invention un assemblage fileté à filets trapézoïdaux dont les filetages coniques ne présentent pas de jeu axial mais interfèrent radialement en fin de vissage, au moins un des filetages présentant une gorge débouchant en sommet de filet.

La figure 9 présente selon l'invention des portions de filetages coniques à filets trapézoïdaux et jeu axial comme dans le cas de la figure 8 mais on a réalisé une gorge 67 dans le filet mâle 31 débouchant sur son flanc d'engagement 35 qui permet de réduire les surfaces frottantes en contact.

La gorge 67 a un axe sensiblement proche de l'axe de l'assemblage.

A titre d'exemple, sa profondeur mesurée axialement est de 50 % de la largeur du filet et sa largeur à son débouché est de 50 % de la hauteur du filet mâle.

Son profil, comme dans les figures précédentes, est un V d'angle 30° environ dont la pointe se termine par un rayon de 0,4 mm.

La présence d'une gorge sur le flanc d'engagement femelle en addition à la gorge 67 ne se justifie pas.

La figure 10 présente le cas d'une gorge 68 débouchant à cheval sur le sommet de filet mâle 39 et le flanc d'engagement mâle 35 d'un assemblage selon l'invention à filetages coniques à filets trapézoïdaux sans jeu axial du type de la figure 8.

Comme dans le cas de la figure 7, la gorge a une disposition inclinée par rapport au sommet de filet et au flanc d'engagement et permet de réduire à la fois les pressions de contact sur les flancs latéraux conjugués et les surfaces frottantes en contact.

Bien qu'on ne l'ait pas représenté, on peut concevoir de réaliser selon l'invention un assemblage à filetages cylindriques et filets trapézoïdaux avec gorge, la ou les gorges étant disposées par exemple en sommet de filet ou à cheval entre sommet de filet et flanc d'engagement et destinées à réduire la pression de contact sur les flancs porteurs.

On peut aussi concevoir de disposer selon l'invention une gorge en sommet de filet sur des filetages cylindriques, coniques ou cylindro-coniques à filets trapézoïdaux coins dont la largeur de filet mâle et femelle est variable tout au long du filetage, de manière à mettre en pression de contact les flancs latéraux des filets en fin de vissage..

La figure 12 montre une gorge disposée en sommet de filet coin à largeur variable sur les filetages 303', 304' d'un assemblage à filetages cylindriques bi-étagés du type de la figure 3.

Les filets mâles 331 de la figure 12B sont de forme trapézoïdale et comportent un flanc porteur 333, un flanc d'engagement 335, un sommet de filet 339 et un fond de filet 337, les sommets et fonds de filet étant disposés sur des surfaces cylindriques coaxiales à l'axe de l'assemblage.

Les flancs porteurs et d'engagement forment tous deux avec la normale à l'axe de l'assemblage un angle qui est compté conventionnellement négativement de sorte que le filet 331 est en forme de queue d'aronde.

La largeur l1 de filet mâle croît continuellement sur chaque étage depuis les filets situés du côté de l'extrémité libre de l'élément mâle en allant vers ceux disposés du côté opposé.

Les filets femelles 332 de la figure 12A sont de forme trapézoïdale en queue d'aronde conjuguée de celle des filets mâles 331 et ils comportent un flanc porteur 334, un flanc d'engagement 336, un sommet de filet 338 et un fond de filet 340, les sommets et fonds de filet étant disposés sur des surfaces cylindriques coaxiales à l'axe de l'assemblage.

Chacun des flancs de filet femelle 334, 336 est parallèle au flanc correspondant respectivement 333, 335 de filet mâle.

La largeur I2 de filets femelles croit continuellement sur un même étage depuis les filets situés du côté de l'extrémité libre de l'élément femelle en allant vers ceux situés du côté opposé, de manière coordonnée à l'évolution de la largeur de filets mâle sur le filetage mâle.

Les filets femelles comportent une gorge 362 qui débouche en sommet de filet 338 dont la forme et la disposition sont similaires à celle 62 de la figure 8A.

La figure 12C montre les filetages mâles et femelles d'un étage au cours de l'assemblage: on constate un espace x constant entre flancs porteurs 333, 334 de chaque filet en prise avec son conjugué.

Par ailleurs, sur ce type de filetage cylindrique, il n'y a pas d'interférence radiale entre sommets et fonds de filet conjugué 337 - 338, 339 - 340.

Au fur et à mesure que l'on visse l'élément mâle dans l'élément femelle, l'espace entre flancs latéraux conjugués diminue jusqu'à devenir nul comme le montre la figure 12D.

Si l'on continue à visser au-delà de ce point, les flancs latéraux mâles 333, 335 s'impriment dans les flancs conjugués femelles 334, 336, la pression de contact entre flancs conjugués augmentant au fur et à mesure que l'on poursuit le vissage. Il s'ensuit une très rapide élévation du couple de vissage et, compte tenu de la surface développée des flancs, on peut terminer le vissage sous un couple extrêmement élevé.

La gorge 362 a comme pour les figures précédentes un profil en V à fond arrondi, l'angle au sommet du V des gorges étant de 30° environ et le rayon de la pointe du V de 0,4 mm. Leur profondeur est par exemple de 70% de la hauteur de filet et leur largeur à leur débouché en sommet de filet est de 35% de la largeur de filet.

La gorge 362 découpe dans le filet femelle 332 des demi-dents 364 et 366 qui sont beaucoup plus flexibles qu'une dent pleine.

La présence d'une gorge sur de tels filets 331, 332 à largeur variable se traduit par une réduction de la pente de la courbe de couple de vissage T en fonction de la rotation N des éléments comme le montre l'allure de la courbe E de la figure 13 par rapport à la courbe D relative à des filets similaires sans gorge alors que le couple de vissage maximal admissible est peu réduit par la présence de la gorge.

La présence d'une gorge sur de tels filets à largeur variable se traduit en outre par un effet d'auto-limitation du couple T au-delà d'un certain seuil. Ceci allonge la rotation N possible avant d'atteindre le couple de vissage maximal admissible et permet de positionner correctement une ou plusieurs paires de portées d'étanchéité séparées 307, 308 à l'aide d'une ou plusieurs paires de butées 309, 309', 310, 310' dans tous les cas d'appariement mâle-femelle.

La figure 14 montre une gorge disposée en sommet de filet coin à largeur variable sur les filetages 203, 204 d'un assemblage à filetages coniques du type de la figure 2.

Les filets mâles 231 de la figure 14B sont de forme trapézoïdale et comportent un flanc porteur 233, un flanc d'engagement 235, un sommet de filet 239 et un fond de filet 237, les sommets et fonds de filet étant disposés sur des surfaces coniques coaxiales à l'axe de l'assemblage et de même conicité.

En alternative non représentée, les sommets et/ou les fonds de filets peuvent être parallèles à l'axe de l'assemblage, la surface primitive étant néanmoins conique.

Les flancs porteurs 233 forment avec la normale à l'axe de l'assemblage un angle qui est compté conventionnellement négativement tandis que les flancs d'engagement 235 forment avec la normale à l'axe de l'assemblage un angle qui est compté conventionnellement positivement.

L'angle entre flanc porteur et flanc d'engagement d'un même filet est tel que les flancs 233, 235 divergent lorsque l'on va vers le sommet de filet 239 de sorte que le filet 331 est en forme dite de demi-queue d'aronde.

La largeur de filet mâle croît continuellement depuis les filets situés du côté de l'extrémité libre de l'élément mâle en allant vers ceux disposés du côté opposé.

Les filets mâles comportent une gorge 261 qui débouche en sommets de filet 239 dont la forme et les dispositions sont similaires à celle 61 de la figure 8B.

Les filets femelles 232 de la figure 14A sont de forme trapézoïdale conjuguée de celle des filets mâles 231 et ils comportent un flanc porteur 234, un flanc d'engagement 236, un sommet de filet 238 et un fond de filet 240.

Chacun des flancs 234, 236 de filet femelle est parallèle au flanc correspondant respectivement 233, 235 de filet mâle.

La largeur de filets femelles croit continuellement depuis les filets situés du côté de l'extrémité libre de l'élément femelle en allant vers ceux situés du côté opposé, de manière coordonnée à l'évolution de la largeur de filets mâles sur le filetage mâle.

La figure 14C montre les filetages mâles et femelles au cours de l'assemblage : on constate un espace x constant entre flancs porteurs 233, 234 de chaque filet en prise avec son conjugué.

Au fur et à mesure que l'on visse l'élément mâle dans l'élément femelle, l'espace x entre flancs latéraux conjugués diminue jusqu'à devenir nul comme le montre la figure 14D. Si l'on continue à visser au-delà de ce point, les flancs latéraux mâles 233, 235 s'impriment dans les flancs conjugués femelles 234, 236, la pression de contact entre flancs conjugués augmentant au fur et à mesure que l'on poursuit le vissage.

Il s'ensuit une très rapide élévation du couple de vissage et, compte tenu de la surface développée des flancs, on peut terminer le vissage sous un couple extrêmement élevé.

Par ailleurs, sur ce type de filetage conique à filets coins, on peut s'arranger pour qu'en fin de vissage, il y ait interférence radiale entre sommets et fonds de filet conjugué 237-238 et/ou 239-240 de sorte que les filets mâles 231 remplissent complètement les creux entre les filets femelles et/ou les filets femelles 232 remplissent complètement les creux entre les filets mâles. La figure 14D montre un cas de remplissage total des filets mâles et femelles, le filetage étant alors étanche en lui-même et permettant d'éviter la présence de graisse entre sommets et fonds de filet conjugués en fin de vissage, qui est cause de mesure erronée du couple de vissage. Préférentiellement on s'arrange pour que l'interférence radiale se développe avant l'arrivée en contact des flancs latéraux conjugués.

La gorge mâle 261 a comme pour les figures précédentes un profil en V à fond arrondi, l'angle au sommet du V des gorges étant de 30° environ et le rayon de la pointe du V de 0,4 mm. Sa profondeur est par exemple de 70% de la hauteur de filet et sa largeur à son débouché en sommet de filet est de 35% de la largeur de filet.

Elle découpe dans le filet mâle 231 des demi-dents 263, 265 qui sont beaucoup plus flexibles qu'une dent pleine et remplit les mêmes fonctions que la gorge 362 dans l'assemblage de la figure 12, fonctions qui ont été décrites plus haut dans le texte. Elle permet également de mieux synchroniser l'extension axiale des flancs latéraux avec l'interférence radiale des sommets et fonds de filets vers la fin du vissage.

L'assemblage selon la présente invention peut être réalisé selon de nombreuses variantes, les quelques exemples de réalisation présentés n'étant nullement limitatifs.

Notamment, la présente invention peut s'appliquer aussi bien à :
- un assemblage fileté dit intégral comme représenté à la figure 3, un élément mâle étant disposé en extrémité d'un premier tube métallique de grande longueur et un élément femelle étant disposé en extrémité d'un second tube métallique également de grande longueur ;
- qu'à un assemblage fileté manchonné comme représenté aux figures 1 et 2 dans lequel deux tubes métalliques de grande longueur comportant un élément mâle en extrémité sont assemblés par l'intermédiaire d'un manchon métallique lequel est muni à chacune de ses extrémités d'un élément femelle, un tel assemblage fileté manchonné mettant en oeuvre deux assemblages filetés selon l'invention.

## Revendications

1. Assemblage fileté de deux tubes métalliques (101-102, 201-202, 301-302) du genre comportant un élément mâle en extrémité d'un premier tube, et un élément femelle en extrémité d'un second tube, l'élément mâle comprenant un filetage mâle extérieur (103, 203, 303, 303'), l'élément femelle comprenant un filetage femelle intérieur (104, 204, 304, 304') dont chacun des flancs de filet est parallèle au flanc correspondant du filetage mâle, les filetages mâle et femelle étant vissés l'un dans l'autre, **caractérisé en ce qu'**au moins l'un des filetages, mâle ou femelle, comporte, dans le but de réduire les forces de contact entre les filetages mâle et femelle, une gorge (21, 22, 41, 51, 56, 61, 62, 67, 68, 261, 362) comprenant deux parois de gorge et un fond de gorge, qui est réalisée dans le volume du filet et qui débouche ou sur le flanc d'engagement ou sur le sommet de filet ou à cheval entre le flanc d'engagement et le sommet de filet.

2. Assemblage fileté selon la revendication 1 **caractérisé en ce que** la gorge est continue sur la longueur développée du ou des filetages.

3. Assemblage fileté selon la revendication 1 ou 2 **caractérisé en ce que** la gorge possède des parois ayant un profil en V et un fond de gorge arrondi.

4. Assemblage fileté selon l'une quelconque des revendications 1 à 3 **caractérisé en ce que** le fond de gorge présente un rayon supérieur ou égal à 0,2 mm.

5. Assemblage fileté selon l'une quelconque des revendications 1 à 4 **caractérisé en ce que**, la gorge (21, 22, 51, 61, 62) débouchant en sommet de filet, sa largeur au débouché est inférieure ou égale aux 2/3 de la largeur du filet.

6. Assemblage fileté selon l'une quelconque des revendications 1 à 4 **caractérisé en ce que**, la gorge (41, 67) débouchant sur le flanc d'engagement, sa largeur au débouché est inférieure ou égale aux 2/3 de la hauteur du filet.

7. Assemblage fileté selon l'une quelconque des revendications 1 à 4 **caractérisé en ce que**, la gorge (56, 68) étant réalisée à cheval entre sommet de filet et flanc d'engagement, sa largeur au débouché est inférieure ou égale aux 2/3 de la plus faible valeur entre la largeur et la hauteur du filet.

8. Assemblage fileté selon l'une quelconque des revendications 1 à 4 **caractérisé en ce que**, la gorge (21, 22, 51, 61, 62) étant disposée en sommet de filet, sa profondeur est inférieure ou égale à la hauteur du filet.

9. Assemblage fileté selon l'une quelconque des revendications 1 à 4 **caractérisé en ce que** la gorge (41, 67) étant réalisée sur le flanc d'engagement, sa profondeur est inférieure ou égale aux 2/3 de la largeur du filet.

10. Assemblage fileté selon l'une quelconque des revendications 1 à 4 **caractérisé en ce que**, la gorge (56, 68) étant réalisée à cheval entre sommet de filet et flanc d'engagement, sa profondeur est inférieure ou égate à la plus faible valeur entre la hauteur du filet et les 2/3 de !a largeur du filet.

11. Assemblage fileté selon l'une quelconque des revendications 1 à 10 **caractérisé en ce que** les filetages mâle et femelle sont coniques à filets trapézoïdaux disposés sur un étage ou sur plusieurs étages.

12. Assemblage fileté selon la revendication 11 **caractérisé en ce qu'**au moins un des sommets de filets mâle et femelle interfère radialement avec le ou les fonds de filets conjugués en fin de vissage.

13. Assemblage fileté selon la revendication 11 **caractérisé en ce que** les filetages mâle et femelle sont du type à filets trapézoïdaux sans jeu axial.

14. Assemblage fileté selon l'une quelconque des revendications 1 à 10 **caractérisé en ce que** les filetages mâle et femelle sont du type cylindrique disposés sur un étage ou plusieurs étages ou du type cylindro-conique.

15. Assemblage fileté selon l'une quelconque des revendications 11 à 14 **caractérisé en ce que** la largeur de filet mâle et femelle varie tout au long du filetage ou de chaque partie filetée de manière coordonnée en constituant des filets coins.

16. Assemblage fileté selon l'une quelconque des revendications 1 à 10 **caractérisé en ce que** les filetages mâle et femelle sont coniques à filets du type rond selon la spécification API 5B.

17. Assemblage fileté selon l'une quelconque des revendications 1 à 16 **caractérisé en ce que** l'élément mâle comprend au moins une portée d'étanchéité mâle (207, 307) et l'élément femelle comprend au moins une portée d'étanchéité femelle (208, 308), les portées mâle et femelle correspondantes interférant radialement en fin de vissage de manière à créer au moins un contact d'étanchéité métal-métal entre éléments mâle et femelle.

18. Assemblage fileté selon l'une quelconque des revendications 1 à 17 **caractérisé en ce que** l'élément mâle et l'élément femelle comprennent chacun au moins une butée, la ou les butées (209, 309, 309') de l'élément mâle venant en appui contre la ou les butées correspondantes (210, 310, 310') de l'élément femelle en fin de vissage.

19. Assemblage fileté selon l'une quelconque des revendications 1 à 18 **caractérisé en ce qu'**il est du type intégral (300).

20. Utilisation de deux assemblages filetés selon l'une quelconque des revendications 1 à 18 pour réaliser un assemblage fileté manchonné (100, 200) entre deux tubes de grande longueur (101-101', 201-201') comportant chacun un élément mâle en extrémité, assemblés par l'intermédiaire d'un manchon métallique muni à chacune de ses extrémités d'un élément femelle.

## Claims

1. A threaded connection for two metal pipes (101-102, 201-202, 301-302) of the type comprising a male element at the end of a first pipe and a female element at the end of a second pipe, the male element comprising a male external thread (103, 203, 303, 303'), the female element comprising a female internal thread (104, 204, 304, 304'), wherein each of the thread flanks is parallel to the corresponding flank of the male thread, the male and female threads being screwed one onto the other, **characterized in that** at least one of the male or female threads comprises, with the aim of reducing the contact forces between the male and female threads, a groove (21, 22, 41, 51, 56, 61, 62, 67, 68, 261, 362) comprising two groove walls and a groove base, which is provided in the bulk of the thread and which opens either into the stabbing flank or into the thread crest or straddling the stabbing flank and the thread crest.

2. A threaded connection according to claim 1, **characterized in that** the groove is continuous over the developed length of the thread or threads.

3. A threaded connection according to claim 1 or claim 2, **characterized in that** the groove has walls in the shape of a V and a rounded groove base.

4. A threaded connection according to any one of claims 1 to 3, **characterized in that** the base of the groove has a radius of 0.2 mm or more.

5. A threaded connection according to any one of claims 1 to 4, **characterized in that** the width of the opening of the groove (21, 22, 51, 61, 62) opening into the thread crest is less than or equal to 2/3 of the thread width.

6. A threaded connection according to any one of claims 1 to 4, **characterized in that** the width of the opening of the groove (41, 67) opening into the stabbing flank is less than or equal to 2/3 of the thread depth.

7. A threaded connection according to any one of claims 1 to 4, **characterized in that** the width of the opening of the groove (56, 68) straddling the thread crest and the stabbing flank is less than or equal to 2/3 of the lesser of the width or depth of the thread.

8. A threaded connection according to any one of claims 1 to 4, **characterized in that** the depth of the groove (21, 22, 51, 61, 62) opening into the thread crest is less than or equal to the thread depth.

9. A threaded connection according to any one of claims 1 to 4, **characterized in that** the depth of the groove (41, 67) formed in the stabbing flank is less than or equal to 2/3 of the thread width.

10. A threaded connection according to any one of claims 1 to 4, **characterized in that** the depth of the groove (56, 58) straddling the thread crest and the stabbing flank is less than or equal to the lesser of the thread depth and 2/3 of the thread width.

11. A threaded connection according to any one of claims 1 to 10, **characterized in that** the male and female threads are tapered with a trapezoidal thread shape disposed in one step or in a plurality of steps.

12. A threaded connection according to claim 11, **characterized in that** at least one of the male and female thread crests radially interferes with the mated thread root or roots when makeup is complete.

13. A threaded connection according to claim 11, **characterized in that** the male and female threads are of a trapezoidal type shape with no axial clearance.

14. A threaded connection according to any one of claims 1 to 10, **characterized in that** the male and female threads are straight, disposed in one or a plurality of steps, or are straight-tapered.

15. A threaded connection according to any one of claims 11 to 14, **characterized in that** the width of the male and female thread varies along the entire length of the thread or of each threaded portion in a co-ordinated manner to constitute wedge threads.

16. A threaded connection according to any one of claims 1 to 10, **characterized in that** the male and female threads are tapered of a round type shape in accordance with specification API 5B.

17. A threaded connection according to any one of claims 1 to 16, **characterized in that** the male element comprises at least one male sealing surface (207, 307) and the female element comprises at least one female sealing surface (208, 308), the corresponding male and female sealing surfaces radially interfering when makeup is complete so as to create at least one metal-metal sealing contact between the male and female elements.

18. A threaded connection according to any one of claims 1 to 17, **characterized in that** the male and female element each comprise at least one abutment, the abutment or abutments (209, 309, 309') of the male element bearing against the corresponding abutments (210, 310, 310') of the female element at the end of the connection makeup.

19. A threaded connection according to any one of claims 1 to 18, **characterized in that** it is an integral type (300).

20. Use of two threaded connections according to any one of claims 1 to 18 to form a threaded and coupled connection (100, 200) between two long pipes (101-101', 201-201'), each comprising a male element at its end, connected via a metal coupling each end of which is provided with a female element.

## Patentansprüche

1. Gewindeverbindung von zwei Metallrohren (101-102, 201-202, 301-302) von der Art, die ein Einsteckelement am Ende eines ersten Rohrs und ein Aufnahmeelement am Ende eines zweiten Rohrs aufweist, wobei das Einsteckelement ein Außengewinde (103, 203, 303, 303') und das Aufnahmeelement ein Innengewinde (104, 204, 304, 304') aufweist, dessen Gewindeflanken parallel zu den entsprechenden Flanken des Außengewindes liegen, wobei das Außen- und das Innengewinde ineinandergeschraubt werden, **dadurch gekennzeichnet, daß** mindestens eines der Gewinde, das Außen- oder das Innengewinde, zum Zweck der Reduzierung der Kontaktkräfte zwischen dem Außen- und dem Innengewinde eine Kehle (21, 22, 41, 51, 56, 61, 62, 67, 68, 261, 362) aufweist, die zwei Kehlwände und einen Kehlboden besitzt, im Volumen des Gewindegangs ausgebildet ist und sich entweder an der Einführflanke oder dem Gewindescheitel oder überlappend zwischen der Einführflanke und dem Gewindescheitel öffnet.

2. Gewindeverbindung nach Anspruch 1, **dadurch gekennzeichnet, daß** die Kehle auf der entwickelten Länge des oder der Gewinde durchgehend ist.

3. Gewindeverbindung nach Anspruch 1 oder 2, **dadurch gekennzeichnet, daß** die Kehle Wände mit einem V-förmigen Profil und einen abgerundeten Kehlboden aufweist.

4. Gewindeverbindung nach einem der Ansprüche 1 bis 3, **dadurch gekennzeichnet, daß** der Kehlboden einen Radius von mehr als oder gleich 0,2 mm aufweist.

5. Gewindeverbindung nach einem der Ansprüche 1 bis 4, **dadurch gekennzeichnet, daß**, wenn die Kehle (21, 22, 51, 61, 62) sich an dem Gewindescheitel öffnet, ihre Breite an der Öffnung kleiner als die oder gleich 2/3 der Breite des Gewindegangs ist.

6. Gewindeverbindung nach einem der Ansprüche 1 bis 4, **dadurch gekennzeichnet, daß**, wenn die Kehle (41, 67) sich an der Einführflanke öffnet, ihre Breite an der Öffnung kleiner als die oder gleich 2/3 der Höhe des Gewindegangs ist.

7. Gewindeverbindung nach einem der Ansprüche 1 bis 4, **dadurch gekennzeichnet, daß**, wenn die Kehle (56, 68) überlappend zwischen dem Gewindescheitel und der Einführflanke ausgebildet ist, ihre Breite an der Öffnung geringer als der oder gleich 2/3 des geringsten Werts zwischen der Breite und der Höhe des Gewindegangs ist.

8. Gewindeverbindung nach einem der Ansprüche 1 bis 4, **dadurch gekennzeichnet, daß**, wenn die Kehle (21, 22, 51, 61, 62) an dem Gewindescheitel angeordnet ist, ihre Tiefe geringer als die oder gleich der Höhe des Gewindegangs ist.

9. Gewindeverbindung nach einem der Ansprüche 1 bis 4, **dadurch gekennzeichnet, daß**, wenn die Kehle (41, 67) an der Einführflanke ausgebildet ist, ihre Tiefe geringer als die oder gleich 2/3 der Breite des Gewindegangs ist.

10. Gewindeverbindung nach einem der Ansprüche 1 bis 4, **dadurch gekennzeichnet, daß**, wenn die Kehle (56, 68) überlappend zwischen dem Gewindescheitel und der Einführflanke ausgebildet ist, ihre Tiefe geringer als der oder gleich dem geringsten Wert zwischen der Höhe des Gewindegangs und 2/3 der Breite des Gewindegangs ist.

11. Gewindeverbindung nach einem der Ansprüche 1 bis 10, **dadurch gekennzeichnet, daß** die Außen- und Innengewinde konische Gewinde mit Trapezgewindegängen sind, die über eine oder mehrere Stufen angeordnet sind.

12. Gewindeverbindung nach Anspruch 11, **dadurch gekennzeichnet, daß** zumindest eine der Außen- und Innengewindes cheitel am Ende des Schraubvorgangs radial auf den Gewindeboden oder die einander zugeordneten Gewindeböden einwirkt.

13. Gewindeverbindung nach Anspruch 11, **dadurch gekennzeichnet, daß** die Außen- und Innengewinde von der Art mit Trapezgewindegang ohne axiales Spiel sind.

14. Gewindeverbindung nach einem der Ansprüche 1 bis 10, **dadurch gekennzeichnet, daß** die Außen- und Innengewinde von zylindrischer Art und auf einer Stufe oder mehreren Stufen angeordnet oder von zylindrisch-konischer Art sind.

15. Gewindeverbindung nach einem der Ansprüche 11 bis 14, **dadurch gekennzeichnet, daß** die Breite des Außen- und des Innengewindegangs über die ganze Länge des Gewindes oder jedes Gewindebereichs koordiniert variiert, indem sie Winkelgewindegänge bildet.

16. Gewindeverbindung nach einem der Ansprüche 1 bis 10, **dadurch gekennzeichnet, daß** die Außen- und Innengewinde konische Gewinde mit runden Gewindegängen gemäß der Spezifikation API 5B sind.

17. Gewindeverbindung nach einem der Ansprüche 1 bis 16, **dadurch gekennzeichnet, daß** das Einsteckelement mindestens einen äußeren Dichtungsvorsprung (207, 307) und das Aufnahmeelement mindestens einen inneren Dichtungsvorsprung (208, 308) aufweist, wobei die einander entsprechenden äußeren und inneren Dichtungsvorsprünge am Ende des Schraubvorgangs radial so wirken, daß sie mindestens einen Metall-Metall-Dichtungskontakt zwischen Einsteckelement und Aufnahmeelement herstellen.

18. Gewindeverbindung nach einem der Ansprüche 1 bis 17, **dadurch gekennzeichnet, daß** das Einsteckelement und das Aufnahmeelement je mindestens einen Anschlag aufweisen, wobei der Anschlag oder die Anschläge (209, 309, 309') des Einsteckelements am Ende des Schraubvorgangs gegen den entsprechenden Anschlag oder die entsprechenden Anschläge (210, 310, 310') des Aufnahmeelements in Anlage gelangen.

19. Gewindeverbindung nach einem der Ansprüche 1 bis 18, **dadurch gekennzeichnet, daß** sie vom integralen Typ (300) ist.

20. Verwendung von zwei Gewindeverbindungen nach einem der Ansprüche 1 bis 18 zur Herstellung einer gemufften Gewindeverbindung (100, 200) zwischen zwei Rohren großer Länge (101-101'; 201-201'), die je am Ende ein Einsteckelement aufweisen und mittels einer metallischen Muffe zusammengesetzt werden, die an jedem ihrer Enden mit einem Aufnahmeelement versehen ist.
